# EUROPEAN PATENT SPECIFICATION

(11) **EP 4 024 936 B1**
(45) Date of publication and mention of the grant of the patent: **01.10.2025**
(21) Application number: 19943153.7
(22) Date of filing: 26.08.2019
(51) Int. Cl.: H04W 16/28, H04W 72/12, H04L 5/00

(54) **TERMINAL AND WIRELESS COMMUNICATION METHOD**
ENDGERÄT UND DRAHTLOSKOMMUNIKATIONSVERFAHREN
TERMINAL ET PROCÉDÉ DE COMMUNICATION SANS FIL

(43) Date of publication of application: 06.07.2022
(73) Proprietor: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2019/033272
(87) International publication number: WO 2021/038682

(56) References cited:
- ERICSSON: "Feature lead summary 2 on beam measurement and reporting", vol. RAN WG1, no. Sanya, China; 20180416 - 20180420, 19 April 2018 (2018-04-19), XP051427757, Retrieved from the Internet <URL:http://www.3gpp.org/ftp/Meetings%5F3GPP%5FSYNC/RAN1/Docs/> [retrieved on 20180419]
- ERICSSON: "Feature lead summary 2 on beam measurement and reporting[ online", 3GPP TSG RAN WG1 #92B R1-1805574, 19 April 2018 (2018-04-19), XP051427757
- SAMSUNG: "Enhancements on multi-beam operations", 3GPP TSG RAN WG1 #98 R1-1908502, 17 August 2019 (2019-08-17), XP051765110
- NTT DOCOMO, INC.: "Discussion on multi-beam enhancement", 3GPP TSG RAN WG1 #98 R1-1909202, 17 August 2019 (2019-08-17), XP051765807
- NTT DOCOMO, INC.: "Discussion on multi-beam enhancement[ online", 3GPP TSG RAN WG1 #98B R1-1911185, 4 October 2019 (2019-10-04), XP051789957

## Description

### Technical Field

The present disclosure relates to a terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

Non-Patent Literature 2 relates to beam measurement and reporting.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010
Non-Patent Literature 2: ERICSSON: "Feature lead summary 2 on beam measurement and reporting", 3GPP DRAFT R1-1805574

### Summary of Invention

### Technical Problem

For future radio communication systems (for example, NR), it is studied to specify one of a plurality of candidates that are configured by higher layer signaling, for a beam (spatial relation) of uplink (UL) transmission, such as a PUCCH, a PUSCH, or an SRS, by a medium access control (MAC) control element (CE), downlink control information (DCI), or the like.

Unfortunately, the number of candidates that can be configured is limited. Use of many candidates may cause delay and resource consumption in reconfiguring by higher layer signaling.

In the light of this, the present disclosure has one object to provide a terminal and a radio communication method by which UL transmission is appropriately controlled.

### Solution to Problem

The present invention is defined by the independent claims. Preferred examples are defined by the dependent claims. Further aspects are provided for facilitating the understanding of the invention.

### Advantageous Effects of Invention

According to one aspect of the present disclosure, UL transmission can be appropriately controlled.

### Brief Description of Drawings

FIG. 1 is a diagram to show an example of a method of determining a spatial relation of a PUSCH;
FIG. 2 is a diagram to show another example of the method of determining a spatial relation of a PUSCH;
FIG. 3 is a diagram to show an example of a schematic structure of a radio communication system according to one example;
FIG. 4 is a diagram to show an example of a structure of a base station according to one example;
FIG. 5 is a diagram to show an example of a structure of a user terminal according to one example; and
FIG. 6 is a diagram to show an example of a hardware structure of the base station and the user terminal according to one example.

### Detailed Description

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (which may be referred to as a "signal/channel"; in the present disclosure, in a similar manner, "A/B" may be interpreted as "at least one of A and B") of a UE based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information (SRI), or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A: Doppler shift, Doppler spread, average delay, and delay spread
- QCL type B: Doppler shift and Doppler spread
- QCL type C: Doppler shift and Average delay
- QCL type D: Spatial reception parameter

Types A to C may correspond to QCL information related to synchronization processing of at least one of time and frequency, and type D may correspond to QCL information related to beam control.

A case that the UE assumes that a certain control resource set (CORESET), channel, or reference signal is in a relationship of specific QCL (for example, QCL type D) with another CORESET, channel, or reference signal, may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (or a reference signal (RS) for the channel) and another signal (for example, another downlink reference signal (DL-RS)). The TCI state may be configured (indicated) by higher layer signaling or physical layer signaling, or a combination of these.

In the present disclosure, higher layer signaling may be, for example, any one or combinations of radio resource control (RRC) signaling, medium access control (MAC) signaling, broadcast information, and so on.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

Note that the channel/signal to which the TCI state is applied may be referred to as a "target channel/RS" or may be simply referred to as a "target" and so on, and such another signal may be referred to as a "reference RS" or may be simply referred to as a "reference" and so on.

A channel for which the TCI state is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS (DL-RS) to have a QCL relationship with the channel may be, for example, at least one of a synchronization signal block (SSB), a channel state information reference signal (CSI-RS), and a reference signal for measurement (Sounding Reference Signal (SRS)). Alternatively, the DL-RS may be a CSI-RS used for tracking (also referred to as a Tracking Reference Signal (TRS)), or a reference signal used for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An information element of the TCI state ("TCI-state IE" of RRC) configured using higher layer signaling may include one or a plurality of pieces of QCL information ("QCL-Info"). The QCL information may include at least one of information related to the DL-RS to have a QCL relationship (DL-RS relation information) and information indicating a QCL type (QCL type information). The DL-RS relation information may include information such as an index of the DL-RS (for example, an SSB index, or a non-zero power CSI-RS (NZP CSI-RS) resource ID (Identifier)), an index of a cell in which the RS is located, and an index of a Bandwidth Part (BWP) in which the RS is located.

### <TCI State for PDCCH>

Information related to QCL between a PDCCH (or DMRS antenna port associated with a PDCCH) and a certain DL-RS may be referred to as a "TCI State for a PDCCH" or the like.

The UE may judge the TCI state for a PDCCH (CORESET) specific to the UE, based on higher layer signaling. In one example, one or a plurality (K number) of TCI states may be configured to the UE for each CORESET by RRC signaling (ControlResourceSet information element).

With respect to each CORESET, one or a plurality of TCI states may be activated by using a MAC CE. The MAC CE may be referred to as a "TCI state indication for UE-specific PDCCH MAC CE." The UE may monitor a CORESET based on an active TCI state corresponding to the CORESET.

### <TCI State for PDSCH>

Information related to QCL between a PDSCH (or DMRS antenna port associated with a PDSCH) and a certain DL-RS may be referred to as a "TCI State for a PDSCH" or the like.

An M (M ≥ 1) number of TCI states for a PDSCH (M pieces of QCL information for a PDSCH) may be notified (configured) to the UE by higher layer signaling. Note that the number M of TCI states that are configured to the UE may be limited by at least one of a UE capability and a QCL type.

DCI that is used for scheduling a PDSCH may contain a certain field indicating a TCI state for the PDSCH (which may be referred to as, for example, a "TCI field" and a "TCI state field"). This DCI may be used for scheduling a PDSCH of one cell and may be referred to as, for example, "DL DCI," "DL assignment," "DCI format 1_0," and "DCI format 1_1."

Whether a TCI field is contained in DCI may be controlled by information that is notified to the UE from a base station. This information may be information indicating that a TCI field in DCI is present or absent (for example, TCI presence information, TCI presence information in DCI, or higher layer parameter TCI-PresentInDCI). This information may be configured to the UE, for example, by higher layer signaling.

In a case that more than eight types of TCI states are configured to the UE, eight or less types of TCI states may be activated (or specified) by using a MAC CE. This MAC CE may be referred to as a "TCI states activation/deactivation for UE-specific PDSCH MAC CE." The value of a TCI field in DCI may show one of the TCI states activated by the MAC CE.

In a case that TCI presence information that is set to "enabled" with respect to a CORESET for scheduling a PDSCH (CORESET that schedules a PDSCH and is used in PDCCH transmission), is configured to the UE, the UE may assume that the TCI field is present in DCI format 1_1 of the PDCCH transmitted on the CORESET.

In the condition that the TCI presence information is not configured to a CORESET for scheduling a PDSCH or the PDSCH is scheduled by DCI format 1_0, a time offset between reception of DL DCI (DCI for scheduling the PDSCH) and reception of the PDSCH corresponding to the DCI is a threshold value or greater. In this case, in order to determine QCL of the PDSCH antenna port, the UE may assume a TCI state or a QCL assumption for the PDSCH to be the same as a TCI state or a QCL assumption applied to a CORESET that schedules the PDSCH and that is used for PDCCH transmission.

In the condition that the TCI presence information is set to "enabled," a TCI field in DCI in a component carrier (CC) for scheduling (PDSCH) may indicate an activated TCI state in a CC or a DL BWP that is scheduled, and the PDSCH may be scheduled by DCI format 1_1. In this case, in order to determine QCL of the PDSCH antenna port, the UE may use TCI that conforms with a value of a TCI field in a detected PDCCH having DCI. In a case that a time offset between reception of DL DCI (for scheduling the PDSCH) and the PDSCH corresponding to the DCI (PDSCH that is scheduled by the DCI) is a threshold value or greater, the UE may assume that a DM-RS port of the PDSCH of a serving cell is in QCL with an RS in the TCI state related to a QCL type parameter provided by the indicated TCI state.

In a case that a single slot PDSCH is configured to the UE, the indicated TCI state may be based on an activated TCI state in a slot having a scheduled PDSCH. In a case that multi-slot PDSCH is configured to the UE, the indicated TCI state may be based on an activated TCI state in a first slot having a scheduled PDSCH, and the UE may expect that the indicated TCI states are the same in slots having the scheduled PDSCH. In a condition that a CORESET associated with a search space set for cross carrier scheduling is configured to the UE, the TCI presence information may be set to "enabled" with respect to the CORESET in the UE, and in a condition that at least one of TCI states configured to a serving cell that is scheduled by the search space set may include a QCL type D, the UE may assume that a time offset between a detected PDCCH and a PDSCH corresponding to this PDCCH is a threshold value or greater.

In an RRC connected mode, in each of the condition that TCI information in DCI (higher layer parameter TCI-PresentInDCI) is set to "enabled" and the condition that the TCI information in DCI is not configured, a time offset between reception of DL DCI (DCI for scheduling a PDSCH) and the corresponding PDSCH (PDSCH that is scheduled by the DCI) may be less than a threshold value. In this case, the UE may assume that a DM-RS port of the PDSCH of a serving cell is in QCL with an RS related to a QCL parameter used for QCL indication of a PDCCH, of a CORESET associated with a monitored search space, with a smallest (lowest) CORESET-ID in a newest (latest) slot in which one or more CORESETs in an active BWP of the serving cell are monitored by the UE.

The time offset between reception of DL DCI and reception of a PDSCH corresponding to the DCI may be referred to as a "scheduling offset."

The threshold value may be referred to as a "time length for QCL," a "timeDurationForQCL," a "Threshold," a "Threshold for offset between a DCI indicating a TCI state and a PDSCH scheduled by the DCI," a "Threshold-Sched-Offset," a "schedule offset threshold value," a "scheduling offset threshold value," and so on.

The scheduling offset threshold value may be based on a UE capability or delay that is required to, for example, decode a PDCCH and change beams. The information of this scheduling offset threshold value may be configured by using higher layer signaling from a base station or may be transmitted from the UE to a base station.

For example, the UE may assume the DMRS port of the PDSCH to be in QCL with a DL-RS based on an activated TCI state for a CORESET corresponding to the lowest CORESET-ID. The latest slot may be, for example, a slot that receives the DCI for scheduling the PDSCH.

Note that a CORESET-ID may be an ID configured by "ControlResourceSet" of an RRC information element (ID for identifying a CORESET).

### <Spatial Relation for PUCCH>

A parameter (PUCCH configuration information or PUCCH-Config) that is used in PUCCH transmission may be configured to the UE by higher layer signaling (for example, radio resource control (RRC) signaling). The PUCCH configuration information may be configured per partial band (for example, uplink bandwidth part (BWP)) in a carrier (which is also referred to as a "cell" and a "component carrier (CC)").

The PUCCH configuration information may contain a list of PUCCH resource set information (for example, PUCCH-ResourceSet) and a list of PUCCH spatial relation information (for example, PUCCH-SpatialRelationInfo).

The PUCCH resource set information may contain a list of PUCCH resource indices (IDs, such as PUCCH-ResourceIds) (for example, resourceList).

In a case that the UE may not have dedicated PUCCH resource configuration information (for example, dedicated PUCCH resource configuration) that is provided by the PUCCH resource set information in the PUCCH configuration information (before RRC setup), the UE may determine a PUCCH resource set based on a parameter (for example, pucch-ResourceCommon) in system information (for example, System Information Block Type 1 (SIB1) or Remaining Minimum System Information (RMSI)). This PUCCH resource set may contain 16 PUCCH resources.

On the other hand, in a case that the UE has the dedicated PUCCH resource configuration information (uplink control channel configuration dedicated to the UE, dedicated PUCCH resource configuration) (after RRC setup), the UE may determine a PUCCH resource set in accordance with the number of UCI information bits.

The UE may determine one PUCCH resource (index) in the PUCCH resource set (for example, PUCCH resource set determined specific to a cell or determined dedicated to UE) based on at least one of a value of a certain field (for example, PUCCH resource indicator field) in downlink control information (DCI) (for example, DCI format 1_0 or 1_1 used for scheduling a PDSCH), the number of CCEs (N_{CCE}) in a control resource set (CORESET) for receiving a PDCCH carrying the DCI, and an index (n_{CCE, 0}) of a head (first) CCE of the PDCCH reception.

The PUCCH spatial relation information (for example, "PUCCH-spatialRelationInfo" of an RRC information element) may indicate a plurality of candidate beams (spatial domain filters) for PUCCH transmission. The PUCCH spatial relation information may indicate a spatial association between an RS (Reference signal) and a PUCCH.

The list of the PUCCH spatial relation information may contain some elements (PUCCH spatial relation information IEs (Information Elements)). Each PUCCH spatial relation information may contain, for example, at least one of an index of PUCCH spatial relation information (ID, such as pucch-SpatialRelationInfoId), an index of a serving cell (ID, such as servingCellId), and information related to an RS (reference RS) that has a spatial relation with a PUCCH.

For example, the information related to the RS may be an SSB index, a CSI-RS index (such as an NZP-CSI-RS resource configuration ID), or an SRS resource ID and an ID of BWP. The SSB index, the CSI-RS index, and the SRS resource ID may be associated with at least one of a beam, a resource, and a port that are selected by measurement of a corresponding RS.

In a case that more than one pieces of SRI related to a PUCCH are configured, the UE may control so that one PUCCH SRI is in active with respect to one PUCCH resource at a certain time, based on a PUCCH spatial relation activation/deactivation MAC CE.

A PUCCH spatial relation activation/deactivation MAC CE for Rel-15 NR is represented in a total of three octets (8 bits × 3 = 24 bits) of octets (octs) 1 to 3.

This MAC CE may contain information such as a target serving cell ID ("Serving Cell ID" field), a BWP ID ("BWP ID" field), and a PUCCH resource ID ("PUCCH Resource ID" field).

This MAC CE contains a field of "Sᵢ" (i = 0-7). The UE activates SRI of SRI ID #i in the condition that the field of a certain Sᵢ indicates 1. The UE deactivates SRI of SRI ID #i in the condition that the field of a certain Sᵢ indicates 0.

In 3 ms after transmitting a positive acknowledgment (ACK) with respect to a MAC CE that activates certain PUCCH spatial relation information, the UE may activate the PUCCH relation information that is specified by the MAC CE.

### <Spatial Relations for SRS and PUSCH>

The UE may receive information (SRS configuration information, such as a parameter in "SRS-Config" of an RRC control element) that is used in transmission of a reference signal for measurement (for example, sounding reference signal (SRS)).

Specifically, the UE may receive at least one of information related to one or a plurality of SRS resource sets (SRS resource set information, such as "SRS-ResourceSet" of an RRC control element) and information related to one or a plurality of SRS resources (SRS resource information, such as "SRS-Resource" of an RRC control element).

One SRS resource set may be associated with a certain number of SRS resources (a certain number of SRS resources may be grouped). Each SRS resource may be identified by an SRS resource indicator (SRI) or an SRS resource ID (Identifier).

The SRS resource set information may contain an SRS resource set ID (SRS-ResourceSetID), a list of SRS resource IDs (SRS-ResourceIds) used in the corresponding resource set, an SRS resource type, and information of SRS usage.

Here, the SRS resource type may indicate one of a periodic SRS, a semi-persistent SRS, and an aperiodic SRS. Note that the UE may periodically (or periodically after activation) transmit a P-SRS and an SP-SRS and may transmit an A-SRS based on an SRS request of DCI.

The usage ("usage" of an RRC parameter or "SRS-SetUse" of an L1 (Layer-1) parameter) may be, for example, beam management, codebook (CB), noncodebook (NCB), or antenna switching. An SRS for use in codebook or noncodebook may be used for determining a precoder of codebook or noncodebook based PUSCH transmission based on SRI.

In one example of codebook based transmission, the UE may determine a precoder for PUSCH transmission based on SRI, a transmitted rank indicator (TRI), and a transmitted precoding matrix indicator (TPMI). In the case of noncodebook based transmission, the UE may determine a precoder for PUSCH transmission, based on SRI.

The SRS spatial relation information (for example, "spatialRelationInfo" of an RRC information element) may indicate spatial relation information between a certain reference signal and an SRS. This certain reference signal may be at least one of a synchronization signal/broadcast channel (Synchonization Signal/Physical Broadcast Channel (SS/PBCH) block, a channel state information reference signal (CSI-RS), and an SRS (for example, another SRS). The SS/PBCH block may be referred to as a "synchronization signal block (SSB)."

The SRS spatial relation information may contain at least one of an SSB index, a CSI-RS resource ID, and an SRS resource ID, as an index of the certain reference signal.

Note that, in the present disclosure, the terms "SSB index," "SSB resource ID," and "SSBRI (SSB Resource Indicator)" may be interchangeably interpreted. The terms "CSI-RS index," "CSI-RS resource ID," and "CRI (CSI-RS Resource Indicator)" may be interchangeably interpreted. The terms "SRS index," "SRS resource ID," and "SRI" may be interchangeably interpreted.

The SRS spatial relation information may contain a serving cell index, a BWP index (BWP ID), and so on that correspond to the certain reference signal.

In NR, transmission of an uplink signal may be controlled based on presence/absence of beam correspondence (BC). The BC may be, for example, capability of a certain node (such as a base station or a UE) in determining a beam (transmission beam or Tx beam) that is used in signal transmission, based on a beam (reception beam or Rx beam) that is used in signal reception.

Note that the BC may be referred to as "transmission/reception beam correspondence (Tx/Rx beam correspondence)," "beam reciprocity," "beam calibration," "calibrated/non-calibrated," "reciprocity calibrated/non-calibrated," "degree of correspondence," "degree of match," and the like.

In a case that spatial relation information related to an SSB or a CSI-RS, and an SRS is configured with respect to a certain SRS resource (for example, in a case that BC is present), the UE may transmit the SRS resource by using the same spatial domain filter (spatial domain transmission filter) as a spatial domain filter (spatial domain reception filter) for receiving the SSB or the CSI-RS. In this case, the UE may assume that a UE reception beam of the SSB or the CSI-RS and a UE transmission beam of the SRS are the same.

In a case that, with respect to a certain SRS, spatial relation information related to another SRS (reference SRS) and the SRS (target SRS) is configured (target SRS) resource (for example, in a case that BC is absent), the UE may transmit the target SRS resource by using the same spatial domain filter (spatial domain transmission filter) as a spatial domain filter (spatial domain transmission filter) for transmitting the reference SRS. That is, in this case, the UE may assume that a UE transmission beam of the reference SRS and a UE transmission beam of the target SRS are the same.

The UE may determine, on the basis of a value of a certain field (for example, SRS resource indicator (SRI) field) in DCI (for example, DCI format 0_1), a spatial relation of a PUSCH that is scheduled by the DCI. Specifically, the UE may use spatial relation information of an SRS resource (for example, "spatialRelationInfo" of an RRC information element) that is determined based on the value of the certain field (for example, SRI), for PUSCH transmission.

In a case of using codebook based transmission for a PUSCH, two SRS resources may be configured to the UE by RRC, and one of the two SRS resources may be indicated by DCI (certain field of 1 bit). In a case of using noncodebook based transmission for a PUSCH, four SRS resources may be configured to the UE by RRC, and one of the four SRS resources may be indicated by DCI (certain field of 2 bits). Using a spatial relation other than the two or four spatial relations configured by RRC, requires RRC reconfiguration.

Note that a DL-RS can be configured with respect to a spatial relation of an SRS resource used for a PUSCH. For example, as to SP-SRS, the spatial relation of a plurality of (for example, up to 16) SRS resources can be configured to the UE by RRC, and one of the plurality of the SRS resources can be indicated to the UE by a MAC CE.

### <UL TCI State>

For Rel. 16 NR, using an UL TCI state as a method of indicating an UL beam is under study. Notification of an UL TCI state is similar to notification of a DL beam (DL TCI state) of a UE. Note that the DL TCI state and a TCI state for PDCCH/PDSCH may be interchangeably interpreted.

A channel/signal (which may be referred to as a "target channel/RS") to which an UL TCI state is configured (specified) may be, for example, at least one of a PUSCH (DMRS of PUSCH), a PUCCH (DMRS of PUCCH), a random access channel (Physical Random Access Channel (PRACH)), an SRS, and so on.

An RS (source RS) having a QCL relation with the channel/signal may be, for example, a DL RS (such as an SSB, a CSI-RS, or a TRS) or an UL RS (such as an SRS or a beam management SRS).

In the UL TCI state, the RS having a QCL relation with the channel/signal may be associated with a panel ID for receiving or transmitting the RS. This association may be explicitly configured (or specified) or implicitly judged by higher layer signaling (such as RRC signaling or a MAC CE).

A correspondence relationship between an RS and a panel ID may be configured in such a manner as to be contained in UL TCI state information or may be configured in such a manner as to be contained in at least one of resource configuration information, spatial relation information, and so on of the RS.

The QCL type indicated by the UL TCI state may be existing QCL types A-D or another QCL type, or it may include a certain spatial relation, an associated antenna port (port index), and so on.

In a case that an associated panel ID is specified (for example, specified by DCI) as to UL transmission, the UE may perform the UL transmission by using a panel corresponding to the panel ID. The panel ID may be associated with the UL TCI state, and in a case that the UL TCI state is specified (or activated) as to a certain UL channel/signal, the UE may identify a panel that is used for the UL channel/signal transmission in accordance with the panel ID associated with the UL TCI state.

### (Method of Determining Spatial Relation)

As described above, as to a PDCCH or a PDSCH, a plurality of TCI states may be configured to the UE by RRC, and one of the plurality of the TCI states may be indicated to the UE by a MAC CE or DCI. Thus, beams can be quickly switched without performing RRC reconfiguration.

The maximum number of TCI states that can be configured by RRC (maxNrofTCI-States) is 128, whereas the maximum number of TCI states for a PDCCH (maxNrofTCI-StatesPDCCH) is 64.

As to a PUCCH, eight spatial relations may be configured per one PUCCH resource to the UE by RRC, and one spatial relation may be indicated to the UE by a MAC CE. Using a spatial relation other than the eight spatial relations configured by RRC, requires RRC reconfiguration.

In a case of using codebook based transmission for a PUSCH, two SRS resources may be configured to the UE by RRC, and one of the two SRS resources may be indicated by DCI (field of 1 bit). In a case of using noncodebook based transmission for a PUSCH, four SRS resources may be configured to the UE by RRC, and one of the four SRS resources may be indicated to the UE by DCI (field of 2 bits). Using a spatial relation other than the two or four spatial relations configured by RRC, requires RRC reconfiguration.

A DL-RS can be configured with respect to a spatial relation of an SRS resource used for a PUSCH. As to SP-SRS, the spatial relation of a plurality of (for example, up to 16) SRS resources can be configured to the UE by RRC, and one of the plurality of the SRS resources can be indicated to the UE by a MAC CE. As to an A-SRS and a P-SRS, a spatial relation of an SRS resource cannot be indicated to the UE by a MAC CE.

In this manner, many candidates for a spatial relation should be configured at a time, as a spatial relation for UL transmission (PUCCH, PUSCH, or SRS), in some cases. For example, in a case of using a DL-RS (TCI state of DL) as a spatial relation for UL transmission due to beam correspondence, many DL-RSs (e.g., 32 SSBs) may be configured.

However, as described above, the number of candidates for a spatial relation that can be configured at a time for UL transmission is limited, which is less than the number of candidates for a TCI state that can be configured at a time for DL transmission. In order to use a spatial relation that is not configured for UL transmission, it is conceivable to configure another spatial relation by RRC reconfiguration. The RRC reconfiguration may cause occurrence of a time when a communication cannot be made, consumption of a resource, and other unfavorable phenomena, resulting in deterioration in system performance.

In a case that a spatial relation is not configured for a PUCCH or an SRS (excluding an SRS for use in beam management) in FR2, the UE may assume that the spatial relation conforms to a default TCI state of a PDCCH. The default TCI state may be the same as a QCL assumption of a CORESET having a lowest CORESET-ID in a latest slot and having a monitored search space.

DCI format 0_1 contains SRI, whereas DCI format 0_0 does not contain SRI.

In Rel. 15 NR, with respect to a PUSCH that is scheduled by DCI format 0_0 in a cell, the UE transmits the PUSCH in accordance with, if available, a spatial relation corresponding to a dedicated PUCCH resource having a lowest ID of an active UL BWP of the cell. The dedicated PUCCH resource may be a PUCCH resource that is configured in a UE-dedicated manner (configured by higher layer parameter PUCCH-Config).

Thus, a PUSCH cannot be scheduled by DCI format 0_0 in a cell (such as a secondary cell (SCell)) to which a PUCCH resource is not configured.

In a case of not configuring "PUCCH on SCell" (PUCCH that is transmitted on a SCell), UCI is transmitted on a PCell. In a case of configuring "PUCCH on SCell," UCI is transmitted on a PUCCH-SCell. Thus, it is not necessary to configure a PUCCH resource and spatial relation information to every SCell, and a cell to which a PUCCH resource is not configured can be provided.

DCI format 0_1 contains a carrier indicator field (CIF), whereas DCI format 0_0 does not contain a CIF. Thus, even in the case that a PUCCH resource is configured to a PCell, cross carrier scheduling of a PUSCH on a SCell cannot be performed by DCI format 0_0 in the PCell.

In view of this, the inventors of the present invention came up with the idea of a method that a UE determines a spatial relation of a PUSCH scheduled by DCI that does not contain SRI.

Examples according to the present disclosure will be described in detail with reference to the drawings as follows. The radio communication methods according to respective examples may each be employed individually, or may be employed in combination.

In the present disclosure, the terms "spatial relation," "spatial relation information," "spatial relation assumption," "spatial domain transmission filter," "UE spatial domain transmission filter," "spatial domain filter," "UE transmission beam," "UL transmission beam," "RS of spatial relation," "DL-RS," "QCL assumption," "SRI," "spatial relation based on SRI," and "UL TCI" may be interchangeably interpreted.

The terms "TCI state," "TCI state or QCL assumption," "QCL assumption," "spatial domain reception filter," "UE spatial domain reception filter," "spatial domain filter," "UE reception beam," "DL reception beam," and "DL-RS" may be interchangeably interpreted. The terms "RS of QCL type D," "DL-RS associated with QCL type D," "DL-RS having QCL type D," "source of DL-RS," "SSB," and "CSI-RS" may be interchangeably interpreted.

In the present disclosure, the TCI state may be information (such as a DL-RS, a QCL type, or a cell on which a DL-RS is transmitted) related to a reception beam (spatial domain reception filter) that is indicated (configured) to the UE. The QCL assumption may be information (such as a DL-RS, a QCL type, or a cell on which a DL-RS is transmitted) related to a reception beam (spatial domain reception filter) that is assumed by the UE based on transmission or reception of an associated signal (such as a

### PRACH) .

In the present disclosure, the terms "PCell," "primary secondary cell (PSCell)," and "special cell (SpCell)" may be interchangeably interpreted.

In the present disclosure, DCI format 0_0 may be interpreted as DCI excluding SRI, DCI excluding indication of a spatial relation, and DCI excluding a CIF. In the present disclosure, DCI format 0_1 may be interpreted as DCI including SRI, DCI including indication of a spatial relation, and DCI including a CIF.

In the present disclosure, the terms "certain UL transmission," "certain kind of UL transmission," "PUSCH," "PUCCH," and "SRS" may be interchangeably interpreted.

In the present disclosure, the terms "index," "ID," "indicator," and "resource ID" may be interchangeably interpreted.

### (Radio Communication Method)

The UE may transmit certain UL transmission in accordance with a certain spatial relation.

The certain UL transmission may be a PUSCH.

### <Example 1>

As to a PUSCH scheduled by DCI format 0_0, the UE may transmit the PUSCH in accordance with a certain spatial relation.

The certain spatial relation may be one of the following certain spatial relations 1 to 3.
(Certain Spatial Relation 1) Default spatial relation assumption
(Certain Spatial Relation 2) Spatial relation (reference spatial relation) configured, indicated, or specified by at least one of RRC, a MAC CE, and DCI
(Certain Spatial Relation 3) Spatial relation corresponding to a certain PUCCH resource (for example, PUCCH resource having a lowest ID of an active UL BWP of a cell)

The phrases "the UE transmits a PUSCH in accordance with a certain spatial relation," "the UE uses a certain spatial relation for a spatial relation of a PUSCH," "the UE assumes (considers) that a spatial relation of a PUSCH is the same as an RS of a certain spatial relation," and "the UE assumes (considers) that a spatial relation of a PUSCH is the same as an RS of QCL type D of a certain spatial relation" may be interchangeably interpreted.

The UE may report whether to support at least one certain spatial relation of the certain spatial relations 1 to 3 as a UE capability (UE capability information or UE capability parameter). As to a PUSCH scheduled by DCI format 0_0, the UE may transmit the PUSCH in accordance with the reported certain spatial relation. As to a PUSCH scheduled by DCI format 0_0, transmission of the PUSCH in accordance with the reported certain spatial relation may be configured, indicated, or specified to the UE.

<<Default Spatial Relation Assumption>>

The certain spatial relation may be a default spatial relation assumption (the certain spatial relation 1).

In the present disclosure, the terms "default spatial relation assumption," "default spatial relation," "TCI state or QCL assumption of certain DL transmission," "RS related to a QCL parameter provided by a TCI state or a QCL assumption of certain DL transmission," "RS of QCL type D of a TCI state or a QCL assumption of certain DL transmission," "spatial relation of reference UL transmission," "certain RS," "certain DL RS," and "first reference signal" may be interchangeably interpreted.

The terms "certain DL transmission," "certain kind of DL transmission," "certain DL channel," and "at least one of PDCCH and PDSCH" may be interchangeably interpreted.

The reference UL transmission may be UL transmission satisfying a certain condition, latest PUSCH transmission, latest PUCCH transmission, latest PRACH transmission, latest SRS transmission, latest UL transmission, or latest transmission of at least one of a PUSCH, a PUCCH, a PRACH, and an SRS.

An RS of QCL type D of a TCI state or a QCL assumption of certain DL transmission, for determining a UE reception beam (spatial domain reception filter), is preferably used as an RS of a spatial relation of a certain UL transmission, for determining an UL transmission beam (spatial domain transmission filter). In particular, in a case that a TCI state or a QCL assumption of certain DL transmission has both of an RS of QCL type A and an RS of a QCL type D that are different from each other, the RS of QCL type D of the TCI state or the QCL assumption of the certain DL transmission is preferably used as an RS of a spatial relation of a certain UL transmission.

For example, as described above, in the case that a TCI state indicates an RS of QCL type A, which is a TRS of a serving cell (for example, SCell) to which the TCI state is configured, and an RS of QCL type D, which is a CSI-RS of another serving cell (for example, PCell) to which repetition is configured, the RS of QCL type A and the RS of QCL type D differ from each other. The parameter of QCL type A may differ in each cell, and thus, the RS of QCL type A is preferably transmitted in the cell to which the TCI state is configured. On the other hand, the RS of QCL type D may be transmitted in a serving cell other than the cell to which the TCI state is configured. Note that the serving cell to which the TCI state is configured may be a PCell, and the serving cell in which the RS of QCL type D is transmitted may be a SCell.

The default spatial relation may be a TCI state of certain DL transmission or a QCL assumption of certain DL transmission. This TCI state or QCL assumption may be explicitly configured (activated or indicated) to the UE by at least one of RRC signaling, a MAC CE, and DCI, or may be determined by the UE based on measurement of an SSB or a CSI-RS. This TCI state or QCL assumption may be an RS that is used in reference UL transmission.

The default spatial relation may be interpreted as an "active TCI state (activated TCI state)," an "active TCI state or QCL assumption," a "default TCI state," a "default QCL assumption," and the like.

A plurality of TCI states may be in active with respect to certain DL transmission. In this case, the default spatial relation may be a default TCI state (default RS, or default TCI state or QCL assumption).

The default TCI state may be interpreted as a "TCI state, an active TCI state, or a QCL assumption of a certain CORESET," or a "TCI state of a CORESET having a lowest CORESET-ID in a latest slot." The default TCI state may also be interpreted as an "RS related to a QCL parameter used for QCL indication of a PDCCH, of a CORESET associated with a monitored search space, in the condition that one or more CORESETs in an active BWP of a serving cell have a lowest CORESET-ID in a latest slot monitored by the UE." The default TCI state may also be interpreted as a "TCI state or QCL assumption of a CORESET that has a lowest CORESET-ID in a latest slot and that is associated with a monitored search space." The default TCI state may also be interpreted as a "TCI state or QCL assumption of a CORESET that has a lowest CORESET-ID in a certain slot and that is associated with a monitored search space." The default TCI state may also be interpreted as a "TCI state or QCL assumption of a certain CORESET," or a "TCI state or QCL assumption of DL transmission corresponding to certain UL transmission (or a DL channel for triggering certain UL transmission, a DL channel for scheduling certain UL transmission, or a DL channel for scheduling a DL channel corresponding to certain UL transmission) (for example, RS of QCL type D of a TCI state or a QCL assumption)." The default TCI state may also be interpreted as an "RS related to a QCL parameter of certain DL transmission (RS in QCL with certain DL transmission (for example, RS of QCL type D))."

The certain slot may be a latest slot of PDSCH reception or a latest slot of certain UL transmission.

The certain CORESET may be a CORESET having a CORESET ID specified by higher layer signaling (for example, spatial relation information of certain UL transmission) or may be CORESET0. The certain CORESET may or may not contain CORESET0.

The default spatial relation may be an RS (RS resource index, SSB index, or CSI-RS resource index) corresponding to a PRACH resource or PRACH occasion used in latest PRACH transmission.

The default spatial relation may be a spatial relation corresponding to a certain PUCCH resource. In a case that the certain UL transmission is a PUSCH of a certain cell, the certain DL transmission may be a PUCCH resource having a lowest ID of an active UL BWP of the cell or may be a PUCCH resource group having a lowest ID of an active UL BWP of the cell.

In a case that the certain UL transmission is a PUCCH, the certain DL transmission may be a PDCCH corresponding to the PUCCH (PDCCH for scheduling a PDSCH corresponding to HARQ-ACK carried by the PUCCH) or may be a PDSCH corresponding to HARQ-ACK carried by the PUCCH. In a case that the certain UL transmission is a PUSCH, the certain DL transmission may be a PDCCH for scheduling the PUSCH, a PDCCH for scheduling a PDSCH corresponding to HARQ-ACK carried on the PUSCH, or a PDSCH corresponding to HARQ-ACK carried on the PUSCH. In a case that the certain UL transmission is an A-SRS, the certain DL transmission may be a PDCCH for triggering the A-SRS. In a case that the certain UL transmission is UL transmission triggered by a MAC CE, such as an SP-SRS, the certain DL transmission may be a PDCCH for scheduling the MAC CE or a PDSCH for carrying the MAC CE.

For example, in a case that the certain UL transmission is a PUCCH (or PUSCH) for carrying HARQ-ACK, the certain DL transmission may be a PDCCH for indicating a resource of the PUCCH (PDCCH for scheduling a PDSCH corresponding to the HARQ-ACK) or may be a PDSCH corresponding to the HARQ-ACK (used for generating the HARQ-ACK).

The UE may determine a default spatial relation that is used for a certain slot.

The certain DL transmission may be a latest PDSCH.

The certain DL transmission may be configured to the UE by higher layer signaling or may be defined by specifications.

The certain DL transmission may be a DL RS for pathloss measurement (such as pathlossReferenceRS in SRS-ResourceSet in SRS-Config, PUCCH-PathlossReferenceRS in PUCCH-PowerControl in PUCCH-Config, or PUSCH-PathlossReferenceRS in PUSCH-PowerControl in PUSCH-Config). The DL RS for pathloss measurement may be a CSI-RS or an SSB. The pathloss reference RS may conform to an active TCI state.

In a case that the DL RS for pathloss measurement is configured by higher layer signaling, the UE may use the configured DL RS for pathloss measurement as a default spatial relation. In a case that the DL RS for pathloss measurement is not configured by higher layer signaling, the UE may determine an ID (RS resource index q_{d}) of a DL RS for pathloss measurement for PUSCH transmission and may use the determined DL RS for pathloss measurement as a default spatial relation.

In a case that the default spatial relation is a TCI state or a QCL assumption, a DL RS for a spatial relation of certain UL transmission and a DL RS for pathloss measurement for power control of the certain UL transmission may differ from each other. The DL RS for a spatial relation of certain UL transmission and the DL RS for pathloss measurement for power control of the certain UL transmission may be set to be the same, whereby power control of the certain UL transmission can be appropriately performed.

The default spatial relation may be an updated DL TCI state. This default spatial relation may be used by a UE that has capability of using one active beam.

The default spatial relation may be a TCI state of a PDCCH for triggering or scheduling an A-SRS or a PUCCH.

### <<Reference Spatial Relation>>

The certain spatial relation may be configured, indicated, or specified by at least one of RRC, a MAC CE, and DCI ((2) described above). This certain spatial relation may be referred to as a "reference spatial relation," "spatial relation configuration," and so on.

For example, a reference spatial relation for a PUSCH that is scheduled by DCI format 0_0, may be configured by higher layer signaling. In another example, a reference spatial relation that can also be used for another UL transmission as well as the PUSCH that is scheduled by DCI format 0_0, may be configured by higher layer signaling.

In the present disclosure, the reference spatial relation may be configured as one of an SSB, a CSI-RS resource, and an SRS resource, in the same manner as in Rel. 15. The reference spatial relation may be an ID for specifying a TCI state. This ID may be an ID that is associated with at least one of a CORESET, a PDSCH, and a CSI-RS resource. The reference spatial relation may be an UL TCI state.

### <<Operation>>

As to a PUSCH scheduled by DCI format 0_0, the UE may determine a spatial relation for the PUSCH depending on conditions.

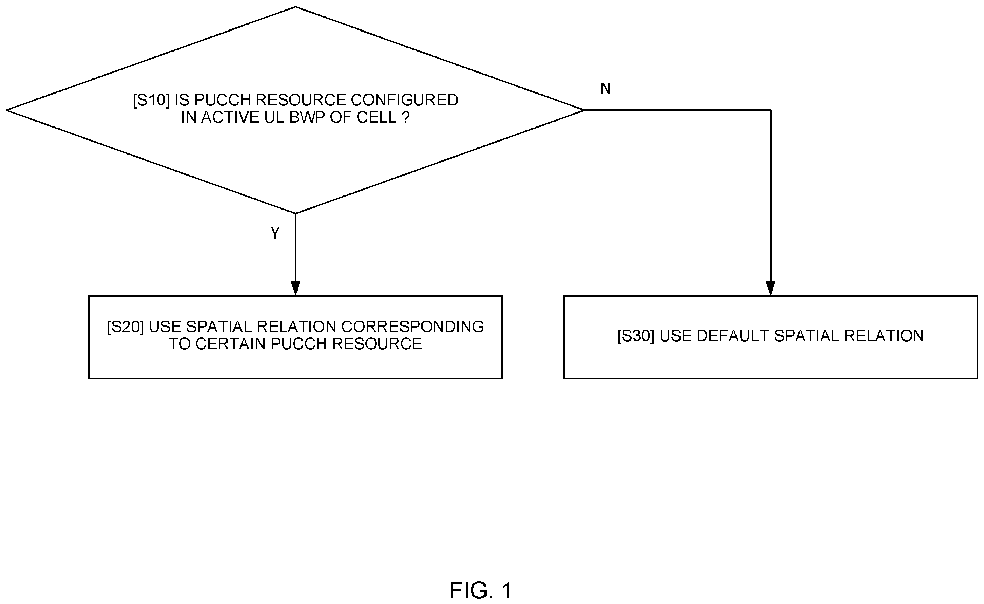

For example, as shown in FIG. 1, in a case that a PUCCH resource is configured to an active UL BWP of a cell (S10: Y), as to a PUSCH scheduled by DCI format 0_0, the UE may transmit the PUSCH in accordance with a spatial relation corresponding to a certain PUCCH resource (S20).

This cell may be a cell for PUSCH transmission.

In a case that a PUCCH resource is not configured to an active UL BWP of a cell (S10: N), as to a PUSCH scheduled by DCI format 0_0, the UE may transmit the PUSCH in accordance with a default spatial relation (S30).

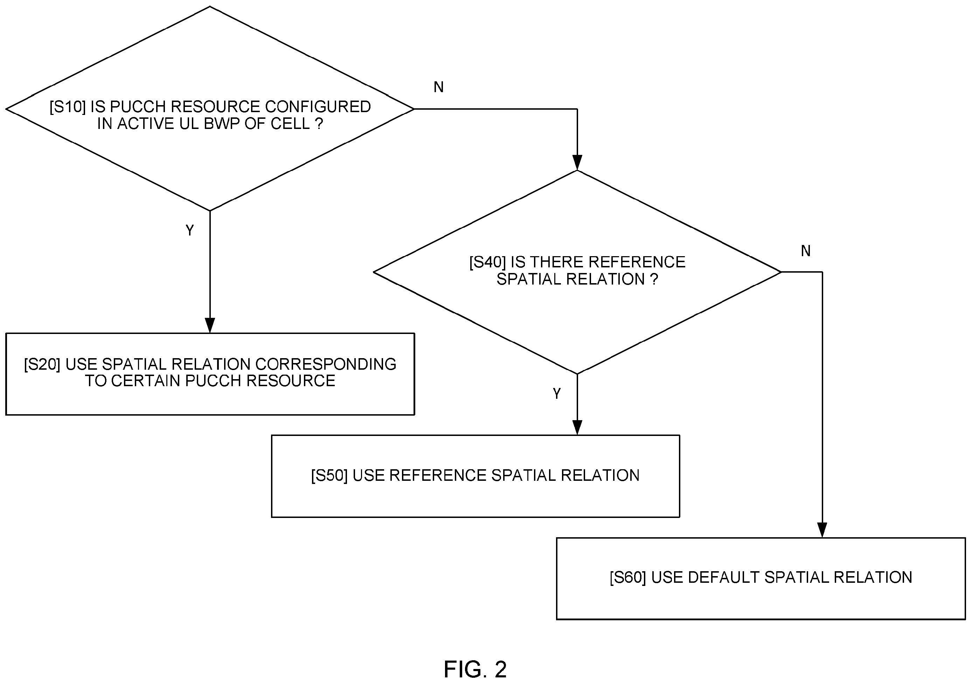

For example, as shown in FIG. 2, in a case that a PUCCH resource is not configured to an active UL BWP of a cell (S10: N), and there is a reference spatial relation that is configured, indicated, or specified by at least one of RRC, a MAC CE, and DCI (S40: Y), as to a PUSCH scheduled by DCI format 0_0, the UE may transmit the PUSCH in accordance with the reference spatial relation (S50). In a case that a PUCCH resource is not configured to an active UL BWP of a cell (S10: N), and there is no reference spatial relation (S40: N), the PUSCH may be transmitted in accordance with a default spatial relation (S60).

For example, a reference spatial relation for a PUSCH that is scheduled by DCI format 0_0, may be configured by higher layer signaling. In another example, a reference spatial relation that can also be used for another UL transmission as well as the PUSCH that is scheduled by DCI format 0_0, may be configured by higher layer signaling.

Configuring a PUCCH resource to an active UL BWP of a cell may be interpreted as "a PUCCH resource of an active UL BWP of a cell is available."

### <<Conditions for Using Default Spatial Relation>>

In a state that a certain requirement is satisfied, as to a PUSCH scheduled by DCI format 0_0, the UE may transmit the PUSCH in accordance with a default spatial relation.

The requirement may be at least one of the following conditions.

One condition may be that use of a default spatial relation to a spatial relation of certain UL transmission is implicitly or explicitly configured. Use of a default spatial relation to a spatial relation of certain UL transmission may be implicitly configured to the UE may correspond to a case in which, for example, a spatial relation of certain UL transmission (such as spatialRelationInfo or PUCCH-SpatialRelationInfo) is not configured to the UE. Use of a default spatial relation to a spatial relation of certain UL transmission may be explicitly configured to the UE may correspond to a case in which a certain parameter is configured by a certain higher layer parameter.

In frequency range 1 (FR1, frequency of 6 GHz or less), the UE may not use analog beam forming for UL transmission, and a spatial relation may not be configured to the UE with respect to UL transmission.

Another condition may be that a PUSCH is transmitted in frequency range 2 (FR2, frequency higher than 6 GHz (or frequency higher than 24 GHz)).

Still another condition may be that an RS of QCL type D of a TCI state for certain DL transmission is applicable.

Yet another condition may be that an RS of QCL type D of a TCI state for certain DL transmission is applicable in FR2.

Yet another condition may be that a certain function in Rel. 16 or later versions is configured.

The certain function may be a beam related function in Rel. 16 or later versions. The certain function may be configured to the UE by higher layer signaling. The beam related function may be at least one of low latency beam selection, Layer 1 (L1)-Signal to Interference plus Noise Ratio (SINR) beam reporting (L1-SINR beam reporting), and BFR on a secondary cell (SCell) (BFR on SCell). The low latency beam selection may be referred to as "fast beam selection," "beam selection without a TCI state (beam selection w/o TCI state)," "beam selection type II," "TCI state indication type 2," and so on. The L1-SINR beam reporting may mean that the UE reports measurement result of L1-SINR (CSI or L1-SINR corresponding to a beam) for beam management. The BFR on SCell may be at least one of detection of beam failure (BF) in a SCell, transmission of beam failure recovery request (BFRQ) to a SCell, and reception of a beam failure recovery (BFR) response from a SCell.

A further condition may be that the UE has reported certain UE capability information. The certain UE capability information may indicate that a certain spatial relation is supported or that the certain function described above is supported. The certain UE capability information may be a parameter indicating that a default spatial relation is supported, or a parameter having a name indicating one of a default spatial relation and a default spatial relation information (default spatial relation info).

A still further condition may be that certain UE capability information is reported and that use of a certain spatial relation is implicitly or explicitly configured.

The UE that supports a certain spatial relation may report certain UE capability information indicating that the certain spatial relation is supported.

The UE that supports a certain spatial relation may report UE capability information that indicates a channel type of supporting the certain spatial relation. The channel type may be at least one of a PUCCH, an SRS, and a PUSCH.

The UE that supports a certain spatial relation may report UE capability information that indicates a QCL source type of supporting the certain spatial relation. The QCL source type may be at least one of a CORESET, a PDCCH, and a PDSCH.

The UE that does not support a certain spatial relation (for example, a UE that has not reported that a certain spatial relation is supported, or a UE that has reported that a certain spatial relation is not supported) may use a spatial relation corresponding to a certain PUCCH resource, instead of a default spatial relation.

Reporting certain UE capability information enables reducing overhead of notification (at least one of configuration and activation) related to spatial relation information.

A yet further condition may be that use of a certain spatial relation is implicitly or explicitly configured.

Example 1 described above enables scheduling a PUSCH by DCI format 0_0 in a cell to which a PUCCH resource is not configured. In this case, overhead of spatial relation and scheduling can be reduced.

### <Example 2>

The UE may assume that a reference spatial relation is configured, indicated, or specified by at least one of RRC, a MAC CE, and DCI. In a case that a spatial relation for reference UL transmission is not configured, the UE may transmit a PUSCH in accordance with the reference spatial relation. The reference UL transmission may be at least one of a PUCCH and an SRS. This PUSCH may not be limited to a PUSCH that is scheduled by DCI format 0_0.

The terms "reference spatial relation," "TCI state or QCL assumption that is configured, indicated, or specified," "RS related to a QCL parameter provided by a TCI state or a QCL assumption that is configured, indicated, or specified," "RS of QCL type D of a TCI state or a QCL assumption that is configured, indicated, or specified," "spatial relation that is configured, indicated, or specified," "RS that is configured, indicated, or specified," "DL RS that is configured, indicated, or specified," and "second reference signal" may be interchangeably interpreted.

The reference spatial relation may be configured as one of an SSB, a CSI-RS resource, and an SRS resource, in the same manner as in Rel. 15. The reference spatial relation may be an ID for identifying a TCI state. This ID may be an ID that is associated with at least one of a CORESET, a PDSCH, and a CSI-RS resource. The reference spatial relation may be an UL TCI state.

In Example 2 described above, an appropriate spatial relation can be used for a PUSCH by configuring, indicating, or specifying a reference spatial relation.

### (Radio Communication System)

Hereinafter, a structure of a radio communication system according to one example of the present disclosure will be described. In this radio communication system, the radio communication methods according to the examples of the present disclosure described above may be used alone or may be used in combination for communication.

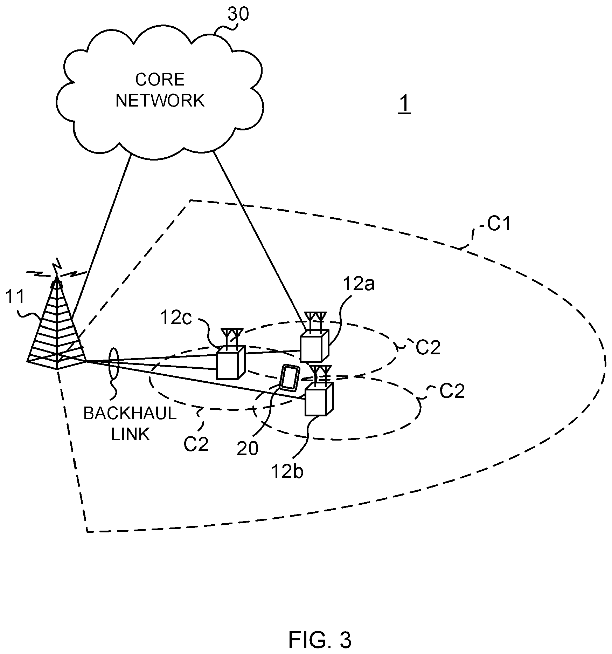

FIG. 3 is a diagram to show an example of a schematic structure of the radio communication system according to one example. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

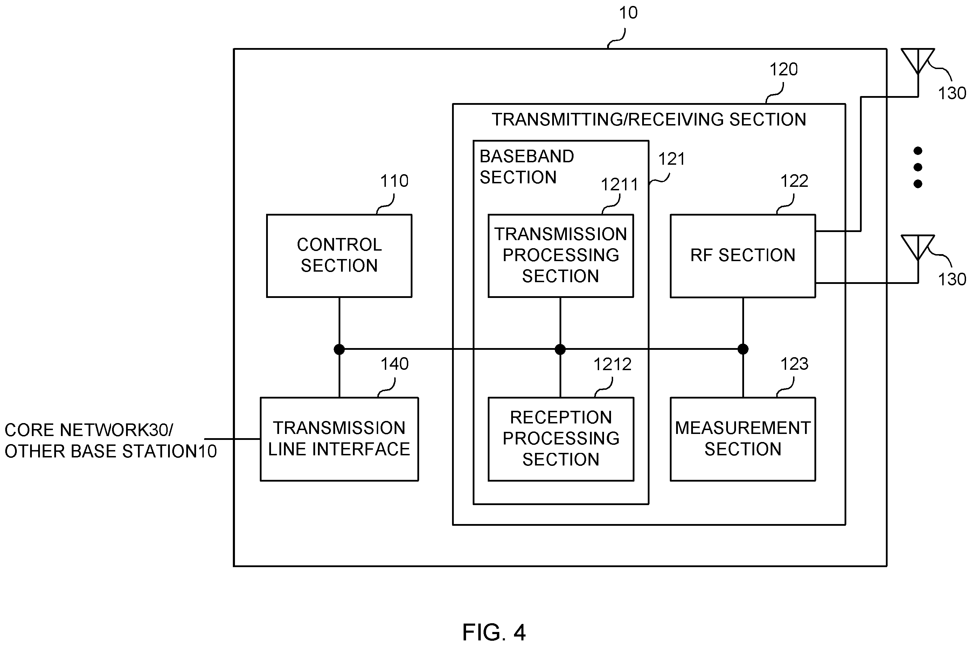

FIG. 4 is a diagram to show an example of a structure of the base station according to one example. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present example, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, on such as data or control information that are acquired from the control section 110, and it may generate a bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit a reference signal (such as an SSB or a CSI-RS). The transmitting/receiving section 120 may transmit information (MAC CE or DCI) that indicates a TCI state for certain DL transmission. The TCI state may indicate at least one of a reference signal (such as an SSB or a CSI-RS), a QCL type, and a cell in which a reference signal is transmitted. The TCI state may indicate one or more reference signals. The one or more reference signals may include a reference signal of QCL type A or a reference signal of QCL type D.

The control section 110 may assume that a first reference signal of a spatial relation of certain uplink transmission (such as an SRS, a PUCCH, or a PUSCH) is a second reference signal (such as an SSB or a CSI-RS) of QCL type D of a transmission configuration indication (TCI) state or a quasi-co-location (QCL) assumption of a certain downlink channel (such as a PDCCH or a PDSCH).

### (User Terminal)

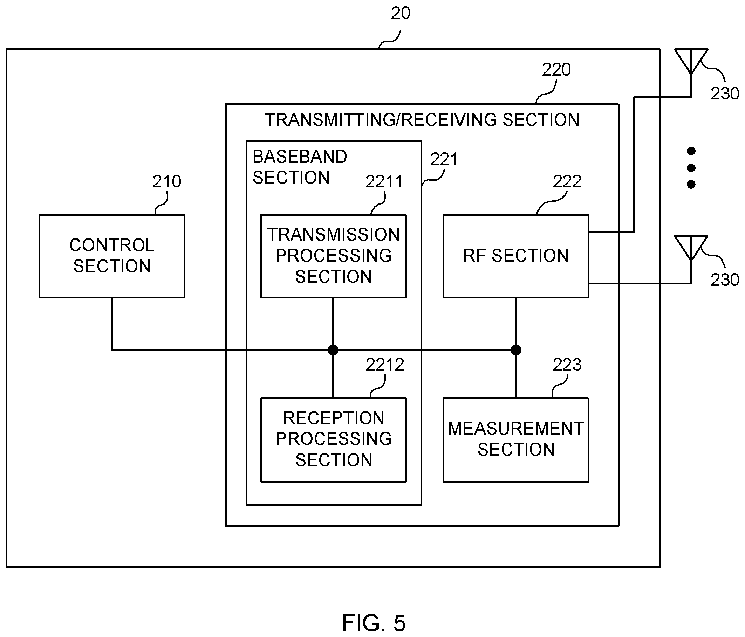

FIG. 5 is a diagram to show an example of a structure of the user terminal according to one example. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present example, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, and digital-to-analog conversion, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The control section 210 may determine, in a case that downlink control information (DCI) for scheduling a physical uplink shared channel (PUSCH) is a DCI format that does not contain indication of a spatial relation, one of a first reference signal and a second reference signal as a certain spatial relation. The first reference signal (such as certain spatial relation 1 or a default spatial relation assumption) relates to quasi-co-location (QCL) of certain downlink transmission or a spatial relation of certain uplink transmission. The second reference signal (such as certain spatial relation 2 or a reference spatial relation) is indicated by information that is received. The transmitting/receiving section 220 may transmit the PUSCH in accordance with the certain spatial relation.

In a case that a PUCCH resource is not configured in an active uplink bandwidth part (UL BWP) and that the DCI is the DCI format, the control section 210 may determine the first reference signal as the certain spatial relation (for example, FIG. 1).

In a case that a PUCCH resource is not configured in an active uplink bandwidth part (UL BWP), the second reference signal does not exist, and the DCI is the DCI format, the control section 210 may determine the first reference signal as the certain spatial relation (for example, FIG. 2).

The transmitting/receiving section 220 may transmit capability information indicating that the determination is supported.

The DCI format may be DCI format 0_0.

### (Hardware Structure)

Note that the block diagrams that have been used to describe the above examples show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

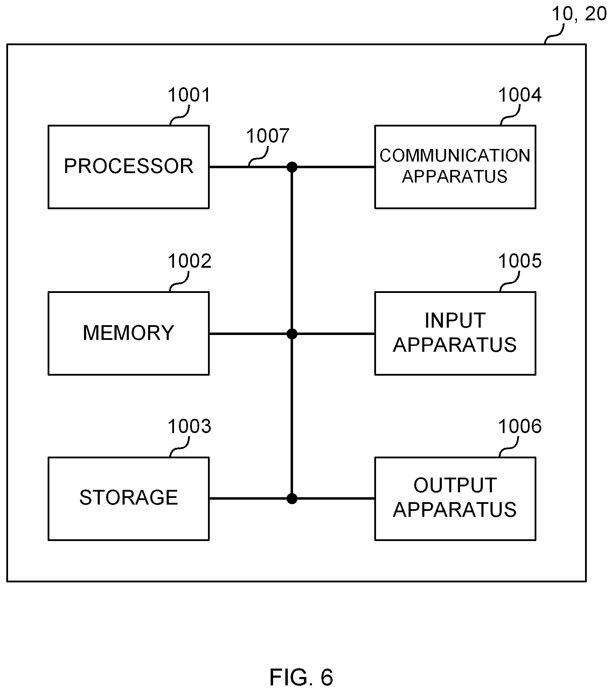

For example, a base station, a user terminal, and so on according to one example of the present disclosure may function as a computer that executes the processes of the radio communication method of the present disclosure. FIG. 6 is a diagram to show an example of a hardware structure of the base station and the user terminal according to one example. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described examples are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one example of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/examples described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/example of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/examples illustrated in the present disclosure may be used individually or in combinations, which may be switched depending on the mode of implementation. The order of processes, sequences, flowcharts, and so on that have been used to describe the aspects/examples in the present disclosure may be re-ordered as long as inconsistencies do not arise. For example, although various methods have been illustrated in the present disclosure with various components of steps in exemplary orders, the specific orders that are illustrated herein are by no means limiting.

The aspects/examples illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the examples described in the present disclosure. The invention according to the present disclosure can be implemented with various corrections and in various modifications, without departing from the scope of the invention defined by the recitations of claims. Consequently, the description of the present disclosure is provided only for the purpose of explaining examples, and should by no means be construed to limit the invention according to the present disclosure in any way.

## Claims

1. A terminal (20) comprising:
a receiving section (220) configured to receive a downlink control information, DCI, format 0_0 scheduling a physical uplink shared channel, PUSCH; and
a control section (210) configured to, when the terminal reports capability information indicating that the terminal supports a default spatial relation, the terminal receives a higher layer parameter for using the default spatial relation, and a physical uplink control channel, PUCCH, resource on an active uplink, UL, bandwidth part, BWP, is not configured, control transmission of the PUSCH according to a quasi co-location, QCL, assumption of a specific control resource set,
wherein the specific control resource set is a control resource set with a lowest control resource set ID on an active BWP.

2. A radio communication method for a terminal (20), the method comprising:
receiving a downlink control information, DCI, format 0_0 scheduling a physical uplink shared channel, PUSCH; and
when the terminal reports capability information indicating that the terminal supports a default spatial relation, the terminal receives a higher layer parameter for using the default spatial relation, and a physical uplink control channel, PUCCH, resource on an active uplink, UL, bandwidth part, BWP, is not configured, controlling transmission of the PUSCH according to a quasi co-location, QCL, assumption of a specific control resource set,
wherein the specific control resource set is a control resource set with a lowest control resource set ID on an active BWP.

3. A base station (10) comprising:
a transmitting section (120) configured to transmit a downlink control information, DCI, format 0_0 scheduling a physical uplink shared channel, PUSCH; and
a control section (110) configured to, when the base station receives capability information indicating that a terminal supports a default spatial relation, the base station transmits a higher layer parameter for using the default spatial relation, and a physical uplink control channel, PUCCH, resource on an active uplink, UL, bandwidth part, BWP, is not configured, control reception of the PUSCH transmitted according to a quasi co-location, QCL, assumption of a specific control resource set,
wherein the specific control resource set is a control resource set with a lowest control resource set ID on an active BWP.

4. A system (1) comprising a terminal (20) according to claim 1 and a base station (10) according to claim 3.

## Patentansprüche

1. Endgerät (20), umfassend:
einen Empfangsabschnitt (220), der so konfiguriert ist, dass er Downlink-Steuerinformationen, DCI, Format 0_0 empfängt, die einen physischen Aufwärtsverbindungskanal, PUSCH, plant; und
einen Steuerabschnitt (210), der so konfiguriert ist, dass, wenn das Endgerät Fähigkeitsinformationen meldet, die angeben, dass das Endgerät eine standardmäßige räumliche Relation unterstützt, das Endgerät einen Parameter höherer Schicht zur Verwendung der standardmäßigen räumlichen Relation empfängt, und eine physische Aufwärtsverbindungs-Steuerkanal-, PUCCH-, Ressource auf einem aktiven Aufwärtsverbindungs-, UL-, Bandbreitenteil, BWP, nicht so konfiguriert ist, dass sie Übertragung des PUSCH gemäß einer Annahme von Quasi-Kollokation, QCL, eines spezifischen Steuerressourcensatzes steuert,
wobei der spezifische Steuerressourcensatz ein Steuerressourcensatz mit einer niedrigsten Steuerressourcensatz-ID auf einem aktiven BWP ist.

2. Funkkommunikationsverfahren für ein Endgerät (20), wobei das Verfahren Folgendes umfasst:
Empfangen von Downlink-Steuerinformationen, DCI, Format 0_0, die einen physischen Aufwärtsverbindungskanal, PUSCH, plant; und
wenn das Endgerät Fähigkeitsinformationen meldet, die angeben, dass das Endgerät eine standardmäßige räumliche Relation unterstützt, das Endgerät einen Parameter höherer Schicht zur Verwendung der standardmäßigen räumlichen Relation empfängt und eine physische Aufwärtsverbindungs-Steuerkanal-, PUCCH-, Ressource auf einem aktiven Aufwärtsverbindungs-, UL-, Bandbreitenteil, BWP, nicht so konfiguriert ist, dass sie Übertragung des PUSCH gemäß einer Annahme von Quasi-Kollokation, QCL, eines spezifischen Steuerressourcensatzes steuert,
wobei der spezifische Steuerressourcensatz ein Steuerressourcensatz mit einer niedrigsten Steuerressourcensatz-ID auf einem aktiven BWP ist.

3. Basisstation (10), umfassend:
einen Übertragungsabschnitt (120), der so konfiguriert ist, dass er Downlink-Steuerinformationen, DCI, Format 0_0 überträgt, die einen physischen Aufwärtsverbindungskanal, PUSCH, plant; und
einen Steuerabschnitt (110), der so konfiguriert ist, dass er, wenn die Basisstation Fähigkeitsinformationen empfängt, die angeben, dass das Endgerät eine standardmäßige räumliche Relation unterstützt, die Basisstation einen Parameter höherer Schicht zur Verwendung der standardmäßigen räumlichen Relation überträgt und eine physische Aufwärtsverbindungs-Steuerkanal-, PUCCH-, Ressource auf einem aktiven Aufwärtsverbindungs-, UL-, Bandbreitenteil, BWP, nicht so konfiguriert ist, dass sie Empfang des gemäß einer Annahme von Quasi-Kollokation, QCL, eines spezifischen Steuerressourcensatzes übertragenen PUSCH steuert,
wobei der spezifische Steuerressourcensatz ein Steuerressourcensatz mit einer niedrigsten Steuerressourcensatz-ID auf einem aktiven BWP ist.

4. System (1), umfassend ein Endgerät (20) nach Anspruch 1 und eine Basisstation (10) nach Anspruch 3.

## Revendications

1. Terminal (20) comprenant :
une section de réception (220) configurée pour recevoir une information de commande de liaison descendante, DCI, au format 0_0 programmant un canal physique partagé de liaison montante, PUSCH ; et
une section de commande (210) configurée pour que, lorsque le terminal signale des informations de capacité indiquant que le terminal supporte une relation spatiale par défaut, le terminal reçoive un paramètre de couche supérieure pour utiliser la relation spatiale par défaut, et un canal physique de commande de liaison montante, PUCCH, ressource sur une partie de bande passante (BWP) de liaison montante UL active, n'est pas configuré, commande la transmission du PUSCH selon une hypothèse de quasi-colocalisation, QCL, d'un ensemble spécifique de ressources de commande,
dans lequel l'ensemble de ressources de commande spécifique est un ensemble de ressources de commande ayant un ID d'ensemble de ressources de commande le plus bas sur une BWP active.

2. Procédé de communication radio pour un terminal (20), le procédé comprenant :
une réception d'une information de commande de liaison descendante, DCI, format 0_0 programmant un canal physique partagé de liaison montante, PUSCH ; et
lorsque le terminal signale des informations de capacité indiquant que le terminal supporte une relation spatiale par défaut, le terminal reçoit un paramètre de couche supérieure pour utiliser la relation spatiale par défaut, et un canal physique de commande de liaison montante, PUCCH, ressource sur une partie de bande passante (BWP) de liaison montante UL active, n'est pas configuré, commandant la transmission du PUSCH selon une hypothèse de quasi-colocalisation, QCL, d'un ensemble de ressources de commande spécifique,
dans lequel l'ensemble spécifique de ressources de commande est un ensemble de ressources de commande ayant un ID d'ensemble de ressources de commande le plus bas sur une BWP active.

3. Station de base (10) comprenant :
une section de transmission (120) configurée pour transmettre des informations de commande de liaison descendante, DCI, format 0_0, programmant un canal physique partagé de liaison montante, PUSCH ; et
une section de commande (110) configurée pour, lorsque la station de base reçoit des informations de capacité indiquant qu'un terminal supporte une relation spatiale par défaut, la station de base transmet un paramètre de couche supérieure pour utiliser la relation spatiale par défaut,
et un canal physique de commande de liaison montante, PUCCH, ressource sur une partie de bande passante de liaison montante active, UL, BWP, n'est pas configurée, commande la réception du PUSCH transmis selon une hypothèse de quasi-colocalisation, QCL, d'un ensemble spécifique de ressources de commande,
dans lequel l'ensemble spécifique de ressources de commande est un ensemble de ressources de commande ayant un ID d'ensemble de ressources de commande le plus bas sur une BWP active.

4. Système (1) comprenant un terminal (20) selon la revendication 1 et une station de base (10) selon la revendication 3.
